(19) **Europäisches Patentamt**

**European Patent Office**

**Office européen des brevets**

(11) Veröffentlichungsnummer: **0 529 213 B1**

(12) **EUROPÄISCHE PATENTSCHRIFT**

(45) Veröffentlichungstag der Patentschrift: **04.01.95**

(51) Int. Cl.6: **B27K 3/50**

(21) Anmeldenummer: **92109510.5**

(22) Anmeldetag: **05.06.92**

(54) **Mittel oder Konzentrat zum Schutz von Schnittholz gegen holzverfärbende Pilze.**

(30) Priorität: **28.08.91 DE 4128492**

(43) Veröffentlichungstag der Anmeldung:
**03.03.93 Patentblatt 93/09**

(45) Bekanntmachung des Hinweises auf die
Patenterteilung:
**04.01.95 Patentblatt 95/01**

(84) Benannte Vertragsstaaten:
**AT BE CH DE DK ES FR GB GR IT LI LU MC
NL PT SE**

(56) Entgegenhaltungen:
**EP-A- 0 050 738**
**EP-A- 0 402 697**
**EP-A- 0 448 932**

(73) Patentinhaber: **DESOWAG Materialschutz
GmbH
Postfach 32 02 20,
Rossstrasse 76
D-40417 Düsseldorf (DE)**

(72) Erfinder: **Hellwig, Volker, Dr.
Thiergartenstrasse 15
W-4150 Krefeld 1 (DE)**
Erfinder: **Hiller, Johannes Christian, Dr.
Vinhoverweg 50
W-4044 Kaarst 2 (DE)**

(74) Vertreter: **Lauer, Dieter, Dr.
c/o Solvay Deutschland GmbH
Hans-Böckler-Allee 20
D-30173 Hannover (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Mittel oder Konzentrat zum Schutz von Schnittholz gegen holzverfärbende Pilze.

Feuchtes Holz, insbesondere frisch gesägtes Schnittholz, wird in feuchtem Zustand von holzverfärbenden Pilzen (Bläuepilzen) befallen, wodurch eine Wertminderung des Holzes hervorgerufen wird. Es ist daher erforderlich, eine Schutzbehandlung des Holzes durchzuführen.

Es ist bereits bekannt (DE-OS 33 08 303), daß 2-Ethylhexansäure eine fungizide Wirksamkeit aufweist. Eigene durchgeführte Versuche ergaben indessen, daß die Wirksamkeit gegen Bläuepilze nicht ausreichend ist.

Es ist weiterhin bekannt, daß 1-(2-(2',4'-Dichlorphenyl)-4-propyl-1,3-dioxolan-2-yl-methyl)-1H-1,2,4-triazol (common name: Propiconazol) wegen seiner Wirksamkeit gegen holzverfärbende Pilze, Moderfäulepilze und holzzerstörende Pilze in Holzschutzmitteln (DE-OS 30 40 499) eingesetzt wird.

Propiconazol allein ist jedoch zum Schnittholzschutz gegen Befall durch holzverfärbende Pilze wenig geeignet, da relativ hohe Wirkstoffkonzentrationen, zwischen 1 g/m$^2$ und 2 g/m$^2$, erforderlich sind, um einen ausreichenden Schutz zu gewährleisten. Dies ist weder unter ökonomischen noch unter ökologischen Gesichtspunkten sinnvoll.

Der Erfindung liegt die Aufgabe zugrunde, ein Mittel oder Konzentrat auf der Basis von 1-(2-(2',4'-Dichlorphenyl)-4-propyl-1,3-dioxolan-2-yl-methyl)-1H-1,2,4-triazol (Propiconazol) zum Schutz von Holz, insbesondere Schnittholz zur Verfügung zu stellen, das gegen holzverfärbende Pilze, insbesondere gegen Bläuebefall eingesetzt werden kann und bei geringerem Gehalt an Propiconazol zumindest gleiche Wirksamkeit aufweist.

Erfindungsgemäß wurde überraschend festgestellt, daß eine Kombination von

A) 1-(2-(2',4'-Dichlorphenyl)-4-propyl-1,3-dioxolan-2-yl-methyl)-1H-1,2,4-triazol (Propiconazol) und

B) 2-Ethylhexansäure

in einem Verhältnis von

1 : 1 bis 1 : 9, vorzugsweise

1 : 3 bis 1 : 5,

eine synergistische Erhöhung der Wirksamkeit gegen Bläuepilze bei der Behandlung von feuchtem Holz, insbesondere von frisch gesägtem Schnittholz zeigt, so daß der Wirkstoff Propiconazol bei gleichbleibender Wirksamkeit des Holzschutzmittels in wesentlich geringerer Menge eingesetzt werden kann.

Das erfindungsgemäße Mittel oder Konzentrat enthält oder besteht somit aus einem Gemisch

A) 1-(2-(2',4'-Dichlorphenyl)-4-propyl-1,3-dioxolan-2-yl-methyl)-1H-1,2,4-triazol (Propiconazol) und

B) 2-Ethylhexansäure

in einem Verhältnis von

1 : 1 bis 1 : 9, vorzugsweise

1 : 3 bis 1 : 5,

in einem polaren und/oder unpolaren organisch-chemischen Lösemittel oder Lösemittelgemisch, vorzugsweise in einem polaren organisch-chemischen Lösemittel oder Lösemittelgemisch oder in Mischungen aus polaren und unpolaren organisch-chemischen Lösemitteln oder in einem Gemisch aus Wasser und einem organisch-chemischen Lösemittel, vorzugsweise einem polaren organisch-chemischen Lösemittel oder Lösemittelgemisch, und mindestens einem Emulgator.

Als polare organisch-chemische Lösemittel werden Alkohole, vorzugsweise Propylenglykol, Hydroxyether, Ester- oder Ketogruppen enthaltende Lösemittel oder Lösemittelgemische eingesetzt.

Als unpolare organisch-chemische Lösemittel werden ölige oder ölartige Lösungsmittel wie Mineralöle oder mineralölhaltige Lösungsmittelgemische, Testbenzin, Petroleum und/oder Alkylbenzole, vorzugsweise Aromatenfraktionen der Mineralöle verwendet.

Als Emulgatoren kommen anionische Emulgatoren oder Emulgatorgemische, vorzugsweise Phosphorsäurepartialester, und/oder nichtionogene Emulgatoren oder Emulgatorgemische, vorzugsweise Alkylpolyglykolether oder Alkylarylpolyglykolether, vorzugsweise ethoxylierte Nonylphenole, zum Einsatz.

Als weiteren Zusatz enthält das erfindungsgemäße Mittel oder Konzentrat einen Aminoalkohol zur pH-Wertregulierung und/oder als Co-Emulgator, vorzugsweise Monoethanolamin.

Das erfindungsgemäße Konzentrat zum Schutz von Schnittholz gegen holzverfärbende Pilze besteht nach einer Ausführungsform aus

5 bis 40 Gew. %, vorzugsweise

10 bis 20 Gew. %,

des Gemisches von

A) 1-(2-(2',4'-Dichlorphenyl)-4-propyl-1,3-dioxolan-2-yl-methyl)-1H-1,2,4-triazol (Propiconazol) und

EP 0 529 213 B1

B) 2-Ethylhexansäure

in einem Verhältnis von

1 : 1 bis 1 : 9, vorzugsweise

1 : 3 bis 1 : 5,

und

mehr als 59 Gew. %, vorzugsweise

mehr als 79 Gew. %,

des polaren und/oder unpolaren organisch-chemischen Lösemittels oder Lösemittelgemisches, vorzugsweise des polaren organisch-chemischen Lösemittels oder Lösemittelgemisches oder des Gemisches aus polaren und unpolaren organisch-chemischen Lösemitteln oder des Gemisches aus Wasser und einem organisch-chemischen Lösemittel, vorzugsweise einem polaren organisch-chemischen Lösemittel oder Lösemittelgemisch, und mindestens einem Emulgator.

Als besonders wirksam herausgestellt hat sich ein Fungizidgehalt von 17,5 Gew.-% mit einem Verhältnis A : B von 1 : 4 in dem erfindungsgemäßen Mittel oder Konzentrat zum Schutz von Schnittholz nach den Ansprüchen 1 bis 8. Mit einem derartigen Wirkstoffverhältnis wurde auch eine gute, zusätzliche Wirkung gegen Schimmelbefall erreicht.

Das erfindungsgemäße Mittel (anwendungsfertige Mittel) zum Schutz von Schnittholz gegen holzverfärbende Pilze enthält nach einer Ausführungsform

1 bis 15 Gew. %, vorzugsweise

3 bis 6 Gew. %,

des Konzentrats, bestehend aus

5 bis 40 Gew. %, vorzugsweise

10 bis 20 Gew. %,

des Gemisches aus

A) 1-(2-(2',4'-Dichlorphenyl)-4-propyl-1,3-dioxolan-2-yl-methyl)-1H-1,2,4-triazol (Propiconazol) und

B) 2-Ethylhexansäure

in einem Verhältnis von

1 : 1 bis 1 : 9, vorzugsweise

1 : 3 bis 1 : 5,

und

mehr als 59 Gew. %, vorzugsweise

mehr als 79 Gew. %,

des polaren und/oder unpolaren organisch-chemischen Lösemittels oder Lösemittelgemisches, vorzugsweise des polaren organisch-chemischen Lösemittels oder Lösemittelgemisches, und mindestens eines Emulgators

sowie

mehr als 84 Gew. %, vorzugsweise

mehr als 93 Gew. %,

Wasser.

Die Komponenten A) und B) der Wirkstoffmischung können nach einer Ausführungsform auch in Form ihrer Salze eingesetzt werden.

Das Schnittholz wird mit dem erfindungsgemäßen Mittel oder Konzentrat derart behandelt, daß auf die Holzoberfläche

1,7 bis 15 g/m$^2$, vorzugsweise

2,5 bis 7,5 g/m$^2$,

des erfindungsgemäßen Mittels oder Konzentrates nach den Ansprüchen 1, 2, 4 bis 8 aufgebracht werden.

Die Imprägnierung des Holzes erfolgt durch Spritzen, Tauchen oder Tränken, wobei das Tränken mittels Verfahren unter Anwendung von Über- und/oder Unterdruck durchgeführt wird, beispielsweise nach Kesseldruckverfahren wie dem Vakuum-Druck-Verfahren (Volltränkverfahren) oder dem Rüping-Verfahren.

3

## Beispiele

Stammscheibentest Bläuebefall / Schimmelbefall

Hierbei bedeuten:

```
Befallsgrad:    0 :   befallsfrei
                1 :   max. 10 % der Oberfläche befallen
                2 :   "      30 %            "           "
                3 :   "      50 %            "           "
                4 :   "      80 %            "      "
                5 :   " total befallen
```

1. Vergleichsbeispiele:

| Wirkstoff | Auftragsmenge g/m² | Bläue | Schimmel |
|---|---|---|---|
| Propiconazol | 1,0 - 1,2<br>2,0 - 2,3<br>3,9 - 4,3 | 1 - 5<br>0<br>0 | 5<br>5<br>0 |
| 2-Ethylhexansäure | 1,9<br>4,3 | 5<br>3 - 5 | 5<br>3 - 5 |

2. Erfindungsgemäße Beispiele

| Konzentrat a): | 2,5 Gew.-% A |
| | 7,5 Gew.-% B |
| | 25 Gew.-% polares Lösemittel |
| | 35 Gew.-% Aromaten |
| | 25 Gew.-% Emulgator 1 |
| | 5 Gew.-% Monoethanolamin |

| anwendungsfertiges Mittel (in $H_2O$) | Auftragsmenge des Konzentrats (in $g/m^2$) | Bläue | Schimmel |
|---|---|---|---|
| 1,5 Gew.-% | 2,4 - 2,7 | 3 | - |
| 3 Gew.-% | 5,1 - 5,4 | 0 | - |
| 6 Gew.-% | 8,4 - 10,5 | 0 | 5 |
| 15 Gew.-% | 27 - 30 | 0 | 0 |

| Konzentrat b): | 3,5 Gew.-% A |
| | 14 Gew.-% B |
| | 57,5 Gew.-% polares Lösemittel |
| | 10 Gew.-% Monoethanolamin |
| | 15 Gew.-% Emulgator 2 |

| anwendungsfertiges Mittel (in $H_2O$) | Auftragsmenge des Konzentrats (in $g/m^2$) | Bläue | Schimmel |
|---|---|---|---|
| 0,85 Gew.-% | 1,0 - 1,5 | 5 | - |
| 1,7 Gew.-% | 2,7 - 2,9 | 0 | - |
| 3,4 Gew.-% | 6,1 - 6,6 | 0 | 3 |
| 8,5 Gew.-% | 13,9 - 14,6 | 0 | 0 |

```
Konzentrat c):      3    Gew.-%   A
                    27    Gew.-%   B
                    60    Gew.-%   Aromaten
                    10    Gew.-%   Emulgator 3
```

| anwendungsfertiges Mittel (in $H_2O$) | Auftragsmenge des Konzentrats (in $g/m^2$) | Bläue | Schimmel |
|---|---|---|---|
| 0,5 Gew.-% | 0,8 | 3 - 5 | - |
| 1   Gew.-% | 1,6 | 3 | - |
| 2   Gew.-% | 3,5 | 0 | 5 |
| 5   Gew.-% | 9,2 | 0 | 0 |

A: Propiconazol

B: 2-Ethylhexansäure

polares Lösemittel: Propylenglykol

Emulgator 1: Mischung aus 15 Gew.-% ethoxyl. Nonylphenol und 10 Gew.-% Phosphorsäurepartialester

Emulgator 2: ethoxyl. Nonylphenol

Emulgator 3: Phosphorsäurepartialester

**Patentansprüche**

1. Mittel oder Konzentrat zum Schutz von Schnittholz gegen holzverfärbende Pilze, dadurch gekennzeichnet, daß es aus einer Mischung von
   A) 1-(2-(2',4'-Dichlorphenyl)-4-propyl-1,3-dioxolan-2-yl-methyl)-1H-1,2,4-triazol und
   B) 2-Ethylhexansäure
   in einem Verhältnis von
   1 : 1 bis 1 : 9, vorzugsweise
   1 : 3 bis 1 : 5,
   in einem polaren und/oder unpolaren organisch-chemischen Lösemittel oder Lösemittelgemisch, vorzugsweise in einem polaren organisch-chemischen Lösemittel oder Lösemittelgemisch oder in Mischungen aus polaren und unpolaren organisch-chemischen Lösemitteln oder in einem Gemisch aus Wasser und einem organisch-chemischen Lösemittel, vorzugsweise einem polaren organisch-chemischen Lösemittel oder Lösemittelgemisch, und mindestens einem Emulgator gelöst, besteht.

2. Konzentrat zum Schutz von Schnittholz gegen holzverfärbende Pilze nach Anspruch 1, dadurch gekennzeichnet, daß es aus

6

5 bis 40 Gew. %, vorzugsweise

10 bis 20 Gew. %,

des Gemisches von

A) 1-(2-(2',4'-Dichlorphenyl)-4-propyl-1,3-dioxolan-2-yl-methyl)-1H-1,2,4-triazol und

B) 2-Ethylhexansäure

in einem Verhältnis von

1 : 1 bis 1 : 9, vorzugsweise

1 : 3 bis 1 : 5,

und

mehr als 59 Gew. %, vorzugsweise

mehr als 79 Gew. %,

des polaren und/oder unpolaren organisch-chemischen Lösemittels oder Lösemittelgemisches, vorzugsweise des polaren organisch-chemischen Lösemittels oder Lösemittelgemisches oder des Gemisches aus polaren und unpolaren organisch-chemischen Lösemitteln oder des Gemisches aus Wasser und einem organisch-chemischen Lösemittel, vorzugsweise einem polaren organisch-chemischen Lösemittel oder Lösemittelgemisch, und mindestens einem Emulgator besteht.

3. Mittel zum Schutz von Schnittholz gegen holzverfärbende Pilze nach Anspruch 1, dadurch gekennzeichnet, daß das Mittel (anwendungsfertige Mittel)

1 bis 15 Gew. %, vorzugsweise

3 bis 6 Gew. %,

des Konzentrats, bestehend aus

5 bis 40 Gew. %, vorzugsweise

10 bis 20 Gew. %,

des Gemisches aus

A) 1-(2-(2',4'-Dichlorphenyl)-4-propyl-1,3-dioxolan-2-yl-methyl)-1H-1,2,4-triazol und

B) 2-Ethylhexansäure

in einem Verhältnis von

1 : 1 bis 1 : 9, vorzugsweise

1 : 3 bis 1 : 5,

und

mehr als 59 Gew. %, vorzugsweise

mehr als 79 Gew. %,

des polaren und/oder unpolaren organisch-chemischen Lösemittels oder Lösemittelgemisches, vorzugsweise des polaren organisch-chemischen Lösemittels oder Lösemittelgemisches, und mindestens eines Emulgators

sowie

mehr als 84 Gew. %, vorzugsweise

mehr als 93 Gew. %,

Wasser enthält.

4. Mittel oder Konzentrat zum Schutz von Schnittholz gegen holzverfärbende Pilze nach einem oder mehreren der Ansprüche 1 bis 3, dadurch gekennzeichnet, daß als polare organisch-chemische Lösemittel Alkohole, vorzugsweise Propylenglykol, Hydroxyether, Ester- oder Ketogruppen enthaltende Lösemittel oder Lösemittelgemische eingesetzt werden.

5. Mittel oder Konzentrat zum Schutz von Schnittholz gegen holzverfärbende Pilze nach einem oder mehreren der Ansprüche 1 bis 4, dadurch gekennzeichnet, daß als unpolare organisch-chemische Lösemittel Mineralöle oder mineralölhaltige Lösungsmittelgemische, Testbenzin, Petroleum und/oder Alkylbenzol, vorzugsweise Aromatenfraktionen der Mineralöle eingesetzt werden.

6. Mittel oder Konzentrat zum Schutz von Schnittholz gegen holzverfärbende Pilze nach einem oder mehreren der Ansprüche 1 bis 5, dadurch gekennzeichnet, daß als Emulgatoren anionische Emulgatoren oder Emulgatorgemische und/oder nichtionogene Emulgatoren oder Emulgatorgemische eingesetzt werden.

7. Mittel oder Konzentrat zum Schutz von Schnittholz gegen holzverfärbende Pilze nach Anspruch 6, dadurch gekennzeichnet, daß als anionische Emulgatoren Phosphorsäurepartialester und als nichtionogene Emulgatoren Alkylpolyglykolether oder Alkylarylpolyglykolether, vorzugsweise ethoxylierte Nonylphenole eingesetzt werden.

8. Mittel oder Konzentrat zum Schutz von Schnittholz gegen holzverfärbende Pilze nach Ansprüchen 1 bis 7, dadurch gekennzeichnet, daß die Wirkstoffe A) und B) in Form ihrer Salze eingesetzt werden.

9. Verfahren zum Schutz von Schnittholz gegen holzverfärbende Pilze, dadurch gekennzeichnet, daß auf die Holzoberfläche
   1,7 bis 15 g/m$^2$, vorzugsweise
   2,5 bis 7,5 g/m$^2$,
des Mittels oder Konzentrates nach einem oder mehreren der Ansprüche 1, 2, 4 bis 8 aufgebracht werden.

## Claims

1. An agent or concentrate for protecting sawn timber against wood-discolouring fungi, characterised in that it consists of a mixture of
   A) 1-(2-(2',4'-dichlorophenyl)-4-propyl-1,3-dioxolan-2-yl-methyl)-1H-1,2,4-triazole and
   B) 2-ethyl hexanoic acid
   in a ratio of
   1 : 1 to 1 : 9, preferably
   1 : 3 to 1 : 5,
   dissolved in a polar and/or non-polar organic-chemical solvent or solvent mixture, preferably in a polar organic-chemical solvent or solvent mixture or in mixtures of polar and non-polar organic-chemical solvents or in a mixture of water and an organic-chemical solvent, preferably a polar organic-chemical solvent or solvent mixture, and at least one emulsifier.

2. A concentrate for protecting sawn timber against wood-discolouring fungi according to Claim 1, characterised in that it consists of
   5 to 40% by weight, preferably
   10 to 20% by weight,
   of the mixture of
   A) 1-(2-(2',4'-dichlorophenyl)-4-propyl-1,3-dioxolan-2-yl-methyl)-1H-1,2,4-triazole and
   B) 2-ethyl hexanoic acid
   in a ratio of
   1 : 1 to 1 : 9, preferably
   1 : 3 to 1 : 5,
   and
   more than 59% by weight, preferably
   more than 79% by weight,
   of the polar and/or non-polar organic-chemical solvent or solvent mixture, preferably of the polar organic-chemical solvent or solvent mixture or of the mixture of polar and non-polar organic-chemical solvents or of the mixture of water and an organic-chemical solvent, preferably a polar organic-chemical solvent or solvent mixture, and at least one emulsifier.

3. An agent for protecting sawn timber against wood-discolouring fungi according to Claim 1, characterised in that the agent (agent ready for use) contains
   1 to 15% by weight, preferably
   3 to 6% by weight,
   of the concentrate, consisting of
   5 to 40% by weight, preferably
   10 to 20% by weight,
   of the mixture of
   A) 1-(2-(2',4'-dichlorophenyl)-4-propyl-1,3-dioxolan-2-yl-methyl)-1H-1,2,4-triazole and
   B) 2-ethyl hexanoic acid
   in a ratio of
   1 : 1 to 1 : 9, preferably
   1 : 3 to 1 : 5,

and
more than 59% by weight, preferably
more than 79% by weight,
of the polar and/or non-polar organic-chemical solvent or solvent mixture, preferably of the polar organic-chemical solvent or solvent mixture, and at least one emulsifier,
and also
more than 84% by weight, preferably
more than 93% by weight,
water.

4. An agent or concentrate for protecting sawn timber against wood-discolouring fungi according to one or more of Claims 1 to 3, characterised in that alcohols, preferably propylene glycol, hydroxyethers, or solvents or solvent mixtures containing ester or keto groups are used as polar organic-chemical solvents.

5. An agent or concentrate for protecting sawn timber against wood-discolouring fungi according to one or more of Claims 1 to 4, characterised in that mineral oils or mineral oil-containing solvent mixtures, white spirit, petroleum and/or alkylbenzene, preferably aromatic fractions of the mineral oils, are used as non-polar organic-chemical solvents.

6. An agent or concentrate for protecting sawn timber against wood-discolouring fungi according to one or more of Claims 1 to 5, characterised in that anionic emulsifiers or emulsifier mixtures and/or non-ionogenic emulsifiers or emulsifier mixtures are used as emulsifiers.

7. An agent or concentrate for protecting sawn timber against wood-discolouring fungi according to Claim 6, characterised in that phosphoric acid partial esters are used as anionic emulsifiers, and alkyl polyglycol ethers or alkyl aryl polyglycol ethers, preferably ethoxylated nonyl phenols, are used as non-ionogenic emulsifiers.

8. An agent or concentrate for protecting sawn timber against wood-discolouring fungi according to Claims 1 to 7, characterised in that the active substances A) and B) are used in the form of their salts.

9. A method for protecting sawn timber against wood-discolouring fungi, characterised in that
1.7 to 15 $g/m^2$, preferably
2.5 to 7.5 $g/m^2$,
of the agent or concentrate according to one or more of Claims 1, 2, 4 to 8 are applied to the surface of the wood.

**Revendications**

1. Agent ou concentré pour la protection du bois de sciage contre des champignons qui le souillent et en altèrent la couleur, produit caractérisé en ce qu'il consiste en un mélange
A) de 1-(2-(2',4'-dichlorophényl)-4-propyl-1,3-dioxolanne-2-yl-méthyl)-1H-1,2,4-triazole et
B) de l'acide 2-éthylhexanoïque
dissous selon un rapport de :
1 : 1 à 1 : 9, avantageusement
1 : 3 à 1 : 5,
dans un solvant ou un mélange de solvants organique(s), chimique(s), polaire(s) et/ou non polaire(s), avantageusement dans un solvant ou un mélange de solvants organique(s) chimique(s) polaire(s) ou dans des mélanges de solvants organiques chimiques polaire(s) et non polaire(s) ou dans un mélange d'eau et d'un solvant chimique organique, avantageusement un solvant ou un mélange de solvants organique(s) chimique(s) polaires, et au moins un émulsifiant.

2. Concentré pour protéger du bois de sciage contre des champignons qui le souillent et en altèrent la couleur, selon la revendication 1, concentré caractérisé en ce qu'il consiste en
5 à 40 % en poids, avantageusement
10 à 20 % en poids,
du mélange

A) du 1-(2-(2',4'-dichlorophényl)-4-propyl-1,3-dioxolanne-2-yl-méthyl)-1H-1,2,4-triazole et

B) de l'acide 2-éthylhexanoïque,

selon un rapport de :

1 : 1 à 1 : 9, avantageusement

1 : 3 à 1 : 5,

et

en plus de 59 % en poids, avantageusement

en plus de 79 % en poids

du solvant ou du mélange de solvants organique(s) chimique(s) polaire(s) et/ou non polaire(s), avantageusement du solvant ou du mélange des solvants organique(s) chimique(s) polaire(s) ou du mélange de solvants organiques chimiques polaire(s) et non polaire(s) ou du mélange de l'eau et d'un solvant organique chimique, avantageusement un solvant ou un mélange de solvants organique(s) chimique(s) polaire(s), et au moins un émulsifiant.

3. Produit pour protéger du bois de sciage contre des champignons qui le souillent eet en altèrent la couleur, selon la revendication 1, produit caractérisé en ce que ce produit (prêt à l'emploi) contient :

1 à 15 % en poids, avantageusement

3 à 6 % en poids,

du concentré consistant en

5 à 40 % en poids, avantageusement

10 à 20 % en poids,

du mélange :

A) de 1-(2-(2',4'-dichlorophényl)-4-propyl-1,3-dioxolanne-2-yl-méthyl)-1H-1,2,4-triazole et

B) de l'acide 2-éthylhexanoïque,

selon un rapport de :

1 : 1 à 1 : 9, avantageusement

1 : 3 à 1 : 5,

et,

plus de 59 % en poids, avantageusement

plus de 79 % en poids,

du solvant ou du mélange de solvants organique(s) chimique(s) polaire(s) et/ou non polaire(s), de préférence du solvant ou du mélange de solvants organiques chimiques polaires, et au moins un émulsifiant ainsi que

plus de 84 % en poids, avantageusement

plus de 93 % en poids

d'eau.

4. Agent ou concentré pour la protection du bois de sciage contre des champignons qui le souillent et en altèrent la couleur, selon une ou plusieurs des revendications 1 à 3, produit caractérisé en ce qu'on utilise comme solvant organique chimique polaire des alcools, avantageusement du propylène glycol, un solvant ou un mélange de solvants contenant des groupes hydroxyéthers, esters ou cétones.

5. Agent ou concentré pour protéger du bois de sciage contre des champignons qui le souillent et en altèrent la couleur, selon une ou plusieurs des revendications 1 à 4, produit caractérisé en ce qu'on utilise comme solvant organique chimique non polaire des huiles minérales ou des mélanges de solvants contenant de l'huile minérale, du "White Spirit", du pétrole et/ou de l'alkyl benzène, avantageusement des fractions aromatiques d'huiles minérales.

6. Agent ou concentré pour protéger du bois de sciage contre des champignons qui le souillent et en altèrent la couleur, selon une ou plusieurs des revendications 1 à 5, produit caractérisé en ce qu'on utilise comme émulsifiants des émulsifiants ou des mélanges d'émulsifiants anioniques et/ou des émulsifiants ou des mélanges d'émulsifiants non ionogènes.

7. Agent ou concentré pour protéger du bois de sciage contre des champignons qui le souillent et en altèrent la couleur, selon la revendication 6, caractérisé en ce qu'on utilise comme émulsifiants anioniques des esters partiels de l'acide phosphorique, et comme émulsifiants non ionogènes, des éthers polyglycoliques d'alkyles ou des éthers polyglycoliques d'alkylaryles, avantageusement des nonyl phénols éthoxylés.

8. Agent ou concentré pour protéger du bois de sciage contre des champignons qui le souillent et en altèrent la couleur, selon les revendications 1 à 7, produit caractérisé en ce qu'on utilise les substances actives (A) et (B) sous la forme de leurs sels.

9. Procédé pour protéger du bois de sciage contre des champignons qui le souillent et en altèrent la couleur, procédé caractérisé en ce qu'on applique sur la surface du bois :

1,7 à 15 g/m$^2$, avantageusement

2,5 à 7,5 g/m$^2$

de l'agent, produit ou concentré selon une ou plusieurs des revendications 1,2,4 à 8.